# EUROPÄISCHE PATENTANMELDUNG

(11) **EP 4 272 894 A1**
(43) Veröffentlichungstag der Anmeldung: **08.11.2023**
(21) Anmeldenummer: 22172057.6
(22) Anmeldetag: 06.05.2022
(51) Int. Cl.: B23Q 15/20, B25F 5/00, B23B 35/00, B23D 59/00, B28D 7/00, B28D 1/04, B23D 45/16

(54) **VERFAHREN ZUM BETRIEB EINER WERKZEUGMASCHINE UND WERKZEUGMASCHINE**

(71) Anmelder: Hilti Aktiengesellschaft, 9494 Schaan (LI)
(72) Erfinder: Greitmann, Ralf, 86916 Kaufering (DE); Grasberger, Stefan, 6800 Feldkirch (AT); Erhardt, Jochen, 86836 Klosterlechfeld (DE)
(74) Vertreter: Hilti Aktiengesellschaft Corporate Intellectual Property

(57) **Zusammenfassung**

Die vorliegende Erfindung betrifft ein Verfahren zum Betrieb einer Werkzeugmaschine mit einem insbesondere rotierenden Werkzeug, wobei die Werkzeugmaschine zumindest mit Werkzeugen des Werkzeugtyps A und des Werkzeugtyps B betrieben werden kann. Der Werkzeugtyp A kann mit einem ersten optimalen Drehzahlbereich assoziiert werden, während der Werkzeugtyp B mit einem zweiten optimalen Drehzahlbereich assoziiert werden kann. Bei dem Verfahren wird während des Anlaufens der Werkzeugmaschine der Werkzeugtyp des Werkzeugs, das an der Werkzeugmaschine verwendet wird, erkannt und ein optimaler Drehzahlbereich in Abhängigkeit von dem ermittelten Werkzeugtyp des Werkzeugs eingestellt. Die Werkzeugmaschine kann dann - je nach Werkzeugtyp - in einem ersten oder zweiten optimalen Drehzahlbereich betrieben werden, wobei die Drehzahlen im zweiten optimalen Drehzahlbereich in der Regel größer sind als die Drehzahlen im ersten optimalen Drehzahlbereich. In einem zweiten Aspekt betrifft die Erfindung eine Werkzeugmaschine zur Durchführung vorgeschlagenen Betriebsverfahrens.

## Beschreibung

Die vorliegende Erfindung betrifft ein Verfahren zum Betrieb einer Werkzeugmaschine mit einem insbesondere rotierenden Werkzeug, wobei die Werkzeugmaschine zumindest mit Werkzeugen des Werkzeugtyps A und des Werkzeugtyps B betrieben werden kann. Der Werkzeugtyp A kann mit einem ersten optimalen Drehzahlbereich assoziiert werden, während der Werkzeugtyp B mit einem zweiten optimalen Drehzahlbereich assoziiert werden kann. Bei dem Verfahren wird während des Anlaufens der Werkzeugmaschine der Werkzeugtyp des Werkzeugs, das an der Werkzeugmaschine verwendet wird, erkannt und ein optimaler Drehzahlbereich in Abhängigkeit von dem ermittelten Werkzeugtyp des Werkzeugs eingestellt. Die Werkzeugmaschine kann dann - je nach Werkzeugtyp - in einem ersten oder zweiten optimalen Drehzahlbereich betrieben werden, wobei die Drehzahlen im zweiten optimalen Drehzahlbereich in der Regel größer sind als die Drehzahlen im ersten optimalen Drehzahlbereich. In einem zweiten Aspekt betrifft die Erfindung eine Werkzeugmaschine zur Durchführung vorgeschlagenen Betriebsverfahrens.

### Hintergrund der Erfindung:

Im Bereich der Werkzeugmaschinen sind verschiedene technische Lösungen und Verfahren bekannt, um das Werkzeug einer Werkzeugmaschine zu identifizieren. Beispielsweise wird in der EP 3 536 461 A2 offenbart, dass eine Antriebseinheit einer Werkzeugmaschine unterschiedlich gesteuert werden kann, je nachdem, ob eine rotatorische oder eine nicht-rotatorische Werkzeugeinheit an der Werkzeugmaschine angeordnet vorliegt. In der EP 2 572 831 A2 wird die Einstellung einer maximalen Drehzahl des Motors der Werkzeugmaschine offenbart, wobei die maximale Drehzahl des Motors der Werkzeugmaschine einem vorbestimmten Einstelldrehmoment entspricht.

Die bekannten technischen Lösungen und Verfahren richten sich allerdings überwiegend an Nutzer von solchen Werkzeugmaschinen, die regelmäßig mit gleichen oder ähnlichen Werkzeugen betrieben oder verwendet werden. Im Stand der Technik sind keine befriedigenden Verfahren zum Betrieb einer Werkzeugmaschine bekannt, die mit mindestens zwei unterschiedlichen Werkzeugtypen betrieben werden können.

Die Aufgabe, die der vorliegenden Erfindung zugrunde liegt, besteht darin, die vorstehend beschriebenen Mängel und Nachteile des Standes der Technik zu überwinden und ein Verfahren zum Betrieb einer Werkzeugmaschine bereitzustellen, mit dem eine solche Werkzeugmaschine optimal betrieben werden kann, die mit mindestens zwei unterschiedlichen Werkzeugtypen betreibbar ist. Ein weiteres Anliegen der vorliegenden Erfindung besteht darin, eine Werkzeugmaschine zur Durchführung des bereitzustellenden Betriebsverfahrens anzugeben. Ein wesentliches Ziel der Erfindung besteht insbesondere darin, den Betrieb der Werkzeugmaschine im Hinblick auf eine Arbeitsgeschwindigkeit des Werkzeugs der Werkzeugmaschine zu optimieren.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zum Betrieb einer Werkzeugmaschine mit einem insbesondere rotierenden Werkzeug vorgesehen, wobei die Werkzeugmaschine zumindest mit Werkzeugen des Werkzeugtyps A und des Werkzeugtyps B betrieben werden kann. Der Werkzeugtyp A ist mit einem ersten optimalen Drehzahlbereich assoziiert, während der Werkzeugtyp B mit einem zweiten optimalen Drehzahlbereich assoziiert ist. Das Verfahren ist durch folgende Verfahrensschritte gekennzeichnet:
a) beim Anlaufen der Werkzeugmaschine: Erkennung des Werkzeugtyps des Werkzeugs, das an der Werkzeugmaschine verwendet wird,
b) Einstellung des optimalen Drehzahlbereichs in Abhängigkeit von dem ermittelten Werkzeugtyp des Werkzeugs, das an der Werkzeugmaschine verwendet wird,
c) Betrieb der Werkzeugmaschine in einem ersten optimalen Drehzahlbereich, wenn ein Werkzeug des Werkzeugtyps A erkannt wird oder
d) Betrieb der Werkzeugmaschine in einem zweiten optimalen Drehzahlbereich, wenn ein Werkzeug des Werkzeugtyps B erkannt wird,
wobei der erste optimale Drehzahlbereich eine erste mittlere Drehzahl n1 umfasst und der der zweite optimale Drehzahlbereich eine zweite mittlere Drehzahl n2 umfasst und die zweite mittlere Drehzahl n2 größer ist als die erste mittlere Drehzahl n1. Das letztgenannte Merkmal bedeutet mit anderen Worten bevorzugt, dass n2 > n1.

Tests haben gezeigt, dass der Betrieb der Werkzeugmaschine durch das vorgeschlagene Verfahren insbesondere im Hinblick auf die Arbeitsgeschwindigkeit des Werkzeugs der Werkzeugmaschine optimiert werden kann. Die Erfinder haben erkannt, dass insbesondere die Umfangsgeschwindigkeit des Werkzeugs der Werkzeugmaschine bzw. die Drehzahl des Werkzeugs der Werkzeugmaschine einen wesentlichen Einfluss auf die mit der Werkzeugmaschine erzielte Arbeitsgeschwindigkeit haben. Mit der Erfindung ist es vorteilhafterweise möglich, für jeden Typ von Werkzeugen eine optimale Drehzahl einzustellen, so dass ein maximaler Arbeitsfortschritt mit einer so arbeitenden Werkzeugmaschine erhalten wird.

Bei der vorgeschlagenen Werkzeugmaschine kann es sich vorzugsweise um einen Trenn- oder Winkelschleifer mit einer Trenn- oder Schleifscheibe als Werkzeug handeln. Das vorgeschlagene Verfahren kann aber auch auf andere Werkzeugmaschinen angewendet werden, insbesondere auf solche Werkzeugmaschinen mit rotierenden Werkzeugen. Rotierende Werkzeuge können beispielsweise Trenn- oder Schleifscheiben sein oder Sägeblätter, wobei die genannten rotierenden Werkzeuge vorzugsweise eine im Wesentlichen kreisförmige Grundfläche aufweisen, um möglichst unwuchtfrei zu rotieren. Wenn die Werkzeugmaschine eine Werkzeugmaschine mit rotierendem Werkzeug ist, der darüber hinaus zum schneidenden Bearbeiten eines Untergrunds vorgesehen ist, können die Arbeitsgeschwindigkeit und der Arbeitsfortschritt im Sinne der Erfindung bevorzugt auch als Schnittgeschwindigkeit bzw. als Schneidefortschritt bezeichnet werden. Es hat sich gezeigt, dass die Schnittgeschwindigkeit und der Schneidefortschritt durch die Einstellung eines optimalen Drehzahlbereichs für einen bestimmten Werkzeugtyp - wie im vorliegenden Verfahren vorgeschlagen - stark beeinflusst und optimiert werden können.

Die beiden Werkzeugtypen A und B können beispielsweise solche Werkzeuge betreffen die für das Schneiden von Stein, Beton oder Mauerwerk vorgesehen sind (Werkzeugtyp A) oder für das Schneiden von Metall, wie zum Beispiel Stahl oder dergleichen (Werkzeugtyp B). Die Werkzeugtypen können sich beispielsweise in Bezug auf das verwendete Material, ihren Aufbau und/oder ihre Masse ("Gewicht") unterscheiden. Beispielsweise können Werkzeuge des Werkzeugtyps A sog. Diamant-Trennscheiben sein, die mit Diamanten oder Diamantsplittern besetzt sind, um die Schneidleistung zu erhöhen. Solche Werkzeuge des Werkzeugtyps A können Stahlkerne umfassen, sowie sog. Diamant-Segmente im Außen- oder Umfangsbereich des bevorzugt kreisförmig ausgebildeten Werkzeugs. Die Werkzeuge des Werkzeugtyps A können beispielsweise Durchmesser in einem Bereich von 200 bis 450 mm aufweisen, wobei besonders Durchmesser von 230 mm, 300 mm, 350 mm oder 400 mm bevorzugt sind. Je nach Durchmesser können die Werkzeuge des Werkzeugtyps A beispielsweise zwischen 0,5 und 2,5 Kilogramm (kg) wiegen. Besonders bevorzugt sind beispielsweise Gewichte von 0,53 kg, 1,28 kg, 1,72 kg oder 2,45 kg, wobei ein Werkzeug mit einem Durchmesser von 230 mm beispielsweise ein Gewicht von 0,53 kg aufweisen kann, während ein Werkzeug mit einem Durchmesser von 400 mm beispielsweise ein Gewicht von 2,45 kg aufweisen kann. Es hat sich gezeigt, dass der optimale Drehzahlbereich der Werkzeuge des Werkzeugtyps A einer Umfangsgeschwindigkeit von 50 bis kleiner als 70 m/s entspricht.

Beispielsweise können Werkzeuge des Werkzeugtyps B abrasiv arbeitende Trennscheiben sein, die sich mit fortschreitender Verwendung abnutzen und auf diese Weise an Gewicht verlieren. Solche Werkzeuge des Werkzeugtyps B können gebundene Schleifkörner aufweisen, die beispielsweise Korund umfassen oder aus Korund gebildet sind. Die Schleifkörner der Werkzeuge des Werkzeugtyps B können vorzugsweise in einem Kunstharz gebunden vorliegen. Die Werkzeuge des Werkzeugtyps B können beispielsweise Durchmesser in einem Bereich von 200 bis 450 mm aufweisen, wobei besonders Durchmesser von 230 mm, 300 mm, 350 mm oder 400 mm bevorzugt sind. Je nach Durchmesser können die Werkzeuge des Werkzeugtyps B beispielsweise zwischen 0,2 und 1,27 Kilogramm (kg) wiegen. Besonders bevorzugt sind Werkzeuge, die am Anfang ihrer Verwendung (Verkaufszustand) Gewichte von ca. 0,21 kg, 0,55 kg, 0,93 kg oder 1,27 kg aufweisen, wobei ein Werkzeug mit einem Durchmesser von 300 mm beispielsweise ein Gewicht von 0,55 kg aufweisen kann, während ein Werkzeug mit einem Durchmesser von 350 mm beispielsweise ein Gewicht von 0,93 kg aufweisen kann. Es hat sich gezeigt, dass der optimale Drehzahlbereich der Werkzeuge des Werkzeugtyps B einer Umfangsgeschwindigkeit von größer als 70 bis 100 m/s entspricht.

Die Erfinder haben erkannt, dass sich die Gewichte der Werkzeuge der unterschiedlichen Werkzeugtypen bei gleichem Durchmesser in etwas um einen Faktor 2 unterscheiden, so dass eine entsprechend ausgebildete Steuereinrichtung der Werkzeugmaschine in der Lage ist, diesen Gewichtsunterschied sicher und eindeutig zu erkennen und die unterschiedlich schweren Werkzeuge den unterschiedlichen Werkzeugtypen A oder B zuzuordnen. Mit anderen Worten kann die Werkzeugmaschine eine Steuereinrichtung zur Auswertung von Sensor-, Gewichts- und/ oder Energiewerten umfassen, wobei die Werkzeugmaschine mit Hilfe der Steuereinrichtung je nach erkanntem Werkzeugtyp unterschiedlich gesteuert bzw. betrieben werden kann, um einen optimalen Arbeitsfortschritt mit der Werkzeugmaschine zu erzielen. Die unterschiedlichen Gewichte schlagen sich insbesondere in der benötigten Energiemenge nieder, die erforderlich ist, um ein Werkzeug aus dem Stillstand in Bewegung zu versetzen. Der bei den Gewichten auftretende Unterscheidungsfaktor 2 kann insbesondere auch bei den Energiemengen beobachtet werden, die zum Beschleunigen der Werkzeuge des Werkzeugtyps A oder B zu Buche schlagen. Es hat sich insbesondere gezeigt, dass Werkzeuge des Typs A in etwa doppelt so viel Energie zum Anlaufen benötigen wie Werkzeuge des Typs B.

Beispielsweise ist es im Kontext der vorliegenden Erfindung möglich, dass beim Hochlaufen der Werkzeugmaschine der Bedarf an Strom ermittelt wird, der zur Beschleunigung des Werkzeugs der Werkzeugmaschine benötigt wird. Der Erfindung liegt die Erkenntnis zu Grunde, dass bei einem schwereren Werkzeug eine größere Stromaufnahme vorliegt als bei einem leichteren Werkzeug. Alternativ oder ergänzend kann auch die Hochlaufzeit Δt1 ermittelt werden, um ein Werkzeug des Werkzeugtyps A von einem Werkzeug des Werkzeugtyps B zu unterscheiden bzw. um feststellen, um welchen Werkzeugtyp es sich handelt. Es wurde im Kontext der Erfindung nämlich darüber hinaus auch erkannt, dass ein schwereres Werkzeug eine größere Hochlaufzeit Δt1 aufweist als ein leichteres Werkzeug.

Da sich Werkzeuge des Werkzeugtyps B während der Arbeit abnutzen können und dadurch an Gewicht verlieren, vergrößert sich der Gewichts- und Energieunterschied zwischen Werkzeugen des Werkzeugtyps A und B im Laufe der Zeit. Wenn beispielsweise mit je einem Werkzeug des Werkzeugtyps A und B, die einen gleichen Durchmesser aufweisen, im Wesentlichen gleich lang gearbeitet wird, wird der anfänglich bei einem Faktor 2 liegende Gewichtsunterschied im Laufe der Zeit immer größer, da das Werkzeug des Werkzeugtyps B während der Arbeit an Material und Gewicht verliert. Wenn das Werkzeug des Werkzeugtyps B anfänglich beispielsweise 0,93 kg wog und das Werkzeug des Werkzeugtyps A beispielsweise 1,72 kg, so kann sich das Werkzeug des Werkzeugtyps B während der Arbeit abnutzen, so dass es zwischenzeitlich zum Beispiel nur noch 0,90 oder 0,85 kg wiegt. Die Erfinder haben erkannt, dass der mit der Zeit größer werdende Unterscheidungsfaktor eine eindeutige Zuordnung eines Werkzeugs zu einem Werkzeugtyp erheblich erleichtern kann.

Vorteilhafterweise kann mit der Erfindung eine Werkzeugmaschine bereitgestellt werden, mit der ein Nutzer der Werkzeugmaschine - ja nach montiertem Werkzeug bzw. Werkzeugtyp - zu einer optimalen Arbeitsgeschwindigkeit geführt werden kann bzw. mit der eine solche optimale Arbeitsgeschwindigkeit vorzugsweise automatisch eingestellt werden kann. Nach Erkennung des Typs des Werkzeugs kann die Drehzahl automatisch oder manuell über ein Bedienelement eingestellt werden. Dabei ist die Werkzeugmaschine vorzugsweise so beschaffen, dass in der Steuereinrichtung der Werkzeugmaschine Maximalwerte für die Drehzahl des Werkzeugs hinterlegt werden können. Die Steuereinrichtung ist dann vorzugsweise weiter in der Lage, den Betrieb der Werkzeugmaschine so zu steuern, dass die hinterlegten Maximalwerte für die Drehzahl des Werkzeugs nicht überschritten werden. Vorzugsweise können die Maximalwerte für die Drehzahl des Werkzeugs je nach Werkzeugtyp variieren. Beispielsweise kann ein Maximalwert für die Drehzahl eines Werkzeugs des Werkzeugtyps A bei 80 m/s liegen, während ein Maximalwert für die Drehzahl eines Werkzeugs des Werkzeugtyps B bei 100 m/s liegt. Wie an der Einheit "m/s" zu erkennen ist, werden die Begriffe "Drehzahl" des Werkzeugs der Werkzeugmaschine und seine Umfangsgeschwindigkeit im Kontext der vorliegenden Erfindung synonym verwendet. Die Drehzahl wird üblicherweise in der Einheit "Umdrehungen pro Minute" (rounds per minute, rpm) angegeben, während die Umfangsgeschwindigkeit in der Einheit "m/s" angegeben wird. Eine Umrechnung von Drehzahl- in Umfangsgeschwindigkeitswerte ist bei Kenntnis des Durchmessers, Radius und/oder des Umfangs des Werkzeugs leicht möglich.

Es ist im Sinne der Erfindung bevorzugt, dass der Werkzeugtyp A ist mit einem ersten optimalen Bereich für die Umfangsgeschwindigkeit assoziiert ist, während der Werkzeugtyp B mit einem zweiten optimalen Bereich für die Umfangsgeschwindigkeit assoziiert wird. Im Rahmen des vorgeschlagenen Verfahrens kann nach Erkennung des Werkzeugtyps des Werkzeugs, das an der Werkzeugmaschine verwendet wird, ein optimaler Bereich für die Umfangsgeschwindigkeit eingestellt werden. Dabei kann die Werkzeugmaschine in einem ersten optimalen Bereich für die Umfangsgeschwindigkeit betrieben werden, wenn ein Werkzeug des Werkzeugtyps A erkannt wird, oder die Werkzeugmaschine kann in einem zweiten optimalen Bereich für die Umfangsgeschwindigkeit betrieben werden, wenn ein Werkzeug des Werkzeugtyps B erkannt wird. Vorzugsweise kann der erste optimale Bereich für die Umfangsgeschwindigkeit eine erste mittlere Umfangsgeschwindigkeit v1 umfassen und der zweite optimale Bereich für die Umfangsgeschwindigkeit eine zweite mittlere Umfangsgeschwindigkeit v2, wobei die zweite mittlere Umfangsgeschwindigkeit v2 größer ist als die erste mittlere Umfangsgeschwindigkeit v1. Das letztgenannte Merkmal bedeutet mit anderen Worten bevorzugt, dass v2 > v1. Es ist im Sinne der Erfindung bevorzugt, dass die Werkzeugmaschine so beschaffen ist, dass in ihrer Steuereinrichtung Maximalwerte für die Umfangsgeschwindigkeit des Werkzeugs hinterlegt werden können. Die Steuereinrichtung ist dann vorzugsweise in der Lage, den Betrieb der Werkzeugmaschine so zu steuern, dass die hinterlegten Maximalwerte für die Umfangsgeschwindigkeit des Werkzeugs nicht überschritten werden.

Die Werkzeugmaschine bzw. ihre Steuereinrichtung können vorzugsweise eine speziell angepasste Elektronik und/oder einen Mikroprozessor umfassen. Die Elektronik bzw. die Steuereinrichtung können beim An- bzw. Hochlaufen des Werkzeugs die für das An- bzw. Hochlaufen benötigte Energie messen, wobei die ermittelten Werte mit hinterlegten Werten verglichen werden können. Die Werte können beispielsweise in der Steuereinrichtung der Werkzeugmaschine hinterlegt sein. Aufgrund der unterschiedlichen Gewichte bzw. Massen der Werkzeuge des Werkzeugtyps A und des Werkzeugtyps B unterscheiden sich vorzugsweise auch die für das An- bzw. Hochlaufen des Werkzeugs erforderlichen Energiemengen. Wenn der Unterscheidungsfaktor bei den Gewichten bzw. Massen der unterschiedlichen Werkzeugtypen bei ca. 2 liegt, liegt vorzugsweise auch der Unterscheidungsfaktor bei den benötigten Energiemengen für die unterschiedlichen Werkzeugtypen bei ca. 2. Die Werkzeugmaschine bzw. ihre Steuereinrichtung sind vorzugsweise dazu eingerichtet, die Drehzahl bzw. die Umfangsgeschwindigkeit des Werkzeugs in Abhängigkeit von der ermittelten Energiemenge bzw. des basierend darauf zugeordneten Werkzeugtyps einzustellen. Diese Einstellung erfolgt vorzugsweise automatisch. Mit anderen Worten kann die Einstellung des optimalen Drehzahlbereichs und/oder des optimalen Bereichs für die Umfangsgeschwindigkeit automatisch erfolgen.

Alternativ oder ergänzend kann die Werkzeugmaschine dazu eingerichtet sein, dem Nutzer die eingestellte Drehzahl und/oder die eingestellte Umfangsgeschwindigkeit anzuzeigen. Darüber hinaus kann dem Nutzer der ermittelte Werkzeugtyp angezeigt werden, um den Nutzer anzuleiten, selbst eine Drehzahl im passenden Drehzahlbereich bzw. eine Umfangsgeschwindigkeit im passenden Bereich für die Umfangsgeschwindigkeit einzustellen. In dieser Ausgestaltung der Erfindung kann die Einstellung des optimalen Drehzahlbereichs und/oder des optimalen Bereichs für die Umfangsgeschwindigkeit manuell erfolgen. Die Anzeige der genannten Daten kann mit einer Anzeigevorrichtung erfolgen, die Bestandteil der Werkzeugmaschine sein kann. Wenn die Werkzeugmaschine beim An- bzw. Hochlaufen der Werkzeugmaschine beispielsweise erkennt, dass an der Werkzeugmaschine ein Werkzeug des Werkzeugtyps A angeordnet ist, kann auf der Anzeigevorrichtung beispielsweise der Schriftzug "Stein" oder "Mauerwerk" eingeblendet werden. Wenn die Werkzeugmaschine erkennt, dass an der Werkzeugmaschine ein Werkzeug des Werkzeugtyps B angeordnet ist, kann auf der Anzeigevorrichtung beispielsweise der Schriftzug "Metall", "Stein" oder "Stahl" eingeblendet werden. Alternativ oder ergänzend können auch Light Emitting Diodes (LEDs) an der Werkzeugmaschine vorgesehen sein, wobei mit den LEDs beispielsweise der ermittelte Werkzeugtyp oder das Material des bearbeiteten Untergrunds angezeigt werden kann. Der Nutzer kann dann leicht erkennen, welcher Werkzeugtyp gerade an der Werkzeugmaschine angeordnet ist und kann sein Nutzerverhalten im Hinblick auf Drehzahl und/oder Umfangsgeschwindigkeit entsprechend anpassen, um mit der Werkzeugmaschine einen möglichst großen Arbeitsfortschritt zu erzielen. Es ist im Sinne der Erfindung bevorzugt, dass der erkannte Werkzeugtyps, der eingestellte optimale Drehzahlbereich und/oder die mittlere Drehzahl des eingestellten optimalen Drehzahlbereichs auf der Anzeigevorrichtung der Werkzeugmaschine angezeigt werden. Mit anderen Worten kann die Werkzeugmaschine eine Anzeigevorrichtung zur Anzeige des erkannten Werkzeugtyps, des eingestellten optimalen Drehzahlbereichs, des eingestellten optimalen Bereichs für die Umfangsgeschwindigkeit, der mittleren Drehzahl und/oder der mittleren Umfangsgeschwindigkeit umfassen.

Neben den LEDs oder der Anzeigevorrichtung kann ein Eingabemittel, wie ein Schalter, an der Werkzeugmaschine vorgesehen sein, um die Erkennung des Werkzeugtyps abzuschalten. Neben einem solchen Schalter kann beispielsweise eine weitere LED vorgesehen sein, die dem Nutzer zeigt, ob die Werkzeugtyp-Erkennung ein- oder ausgeschaltet ist. Wenn die Werkzeugtyp-Erkennung ausgeschaltet ist, wird die Werkzeugmaschine vorzugsweise in dem dritten Drehzahlbereich betrieben, der die dritte mittlere Drehzahl n3 umfasst.

Es ist im Sinne der Erfindung bevorzugt, dass die Werkzeugmaschine ein Bedienelement für die manuelle Einstellung des optimalen Drehzahlbereichs aufweist. Bei dem Bedienelement kann es sich vorzugsweise um eine Mensch-Maschine-Schnittstelle (Human-Machine-Interface, HMI) handeln. Die Mensch-Maschine-Schnittstelle kann Bedienelemente, wie Taster, Knöpfe, Schalter oder dergleichen, aufweisen, mit denen ein Nutzer den optimalen Drehzahlbereich und/oder den optimalen Bereich für die Umfangsgeschwindigkeit für die Werkzeugmaschine einstellen kann. Darüber hinaus kann die Mensch-Maschine-Schnittstelle eine Anzeigevorrichtung aufweisen, auf der der erkannte Werkzeugtyp des Werkzeugs der Werkzeugmaschine angezeigt werden kann. Der Nutzer kann dann mit den Bedienelementen der Mensch-Maschine-Schnittstelle den «richtigen», d.h. den zu dem erkannten Werkzeugtyp passenden optimalen Drehzahlbereich bzw. den passenden optimalen Bereich für die Umfangsgeschwindigkeit manuell einstellen.

Es ist im Sinne der Erfindung bevorzugt, dass die Werkzeugmaschine in einem dritten optimalen Drehzahlbereich und/oder in einem dritten optimalen Bereich für die Umfangsgeschwindigkeit betrieben werden kann, wenn keine Erkennung des Werkzeugtyps des Werkzeugs, das an der Werkzeugmaschine angeordnet vorliegt, möglich ist. Falls somit das Werkzeug der Werkzeugmaschine beim An- bzw. Hochlaufen der Werkzeugmaschine nicht erkannt werden kann oder die Erkennung des Werkzeugtyps fehlschlägt, wird die Werkzeugmaschine vorzugsweise in einem mittleren Drehzahlbereich oder in einem mittleren Bereich der Umfangsgeschwindigkeit betrieben. Es ist im Sinne der Erfindung bevorzugt, dass der dritte optimale Drehzahlbereich eine dritte mittlere Drehzahl n3 umfasst, wobei die dritte mittlere Drehzahl n3 vorzugsweise zwischen der ersten mittleren Drehzahl n1 und der zweiten mittleren Drehzahl n2 liegt. Vorzugsweise kann der dritte optimale Bereich für die Umfangsgeschwindigkeit eine dritte mittlere Umfangsgeschwindigkeit v3 umfassen, wobei die dritte mittlere Umfangsgeschwindigkeit v3 vorzugsweise zwischen der ersten mittleren Umfangsgeschwindigkeit v1 und der zweiten mittleren Umfangsgeschwindigkeit v2 liegt. Das bedeutet im Sinne der Erfindung bevorzugt, dass die dritte mittlere Drehzahl n3 größer ist als die erste mittlere Drehzahl n1 und dass die zweite mittlere Drehzahl n2 größer ist als die dritte mittlere Drehzahl n3: n1 < n3 < n2. Da die dritte mittlere Drehzahl n3 vorzugsweise zwischen der ersten und der zweiten mittleren Drehzahl liegt, kann die dritte mittlere Drehzahl n3 bevorzugt auch einfach nur als «mittlere Drehzahl n3» bezeichnet werden. Es ist im Sinne der Erfindung bevorzugt, dass die dritte mittlere Umfangsgeschwindigkeit v3 größer ist als die erste mittlere Umfangsgeschwindigkeit v1 und dass die zweite mittlere Umfangsgeschwindigkeit v2 größer ist als die dritte mittlere Umfangsgeschwindigkeit v3: v1 < v3 < v2. Da die dritte mittlere Umfangsgeschwindigkeit v3 vorzugsweise zwischen der ersten und der zweiten mittleren Umfangsgeschwindigkeit liegt, kann die dritte mittlere Umfangsgeschwindigkeit v3 bevorzugt auch einfach nur als «mittlere Umfangsgeschwindigkeit v3» bezeichnet werden.

Es ist im Sinne der Erfindung bevorzugt, dass die Werkzeugmaschine zur Erkennung des Werkzeugtyps des Werkzeugs, das an der Werkzeugmaschine verwendet wird, mindestens einen Sensor aufweist. Vorzugsweise kann der mindestens eine Sensor zur Erkennung des Werkzeugtyps des Werkzeugs, das an der Werkzeugmaschine verwendet wird, ausgewählt sein aus einer Gruppe umfassend optischer Sensor, Material-Sensor und/oder Gewichtssensor. Wenn der mindestens eine Sensor zur Erkennung des Werkzeugtyps des Werkzeugs ein optischer Sensor ist, kann an dem Werkzeug eine Markierung, ein Tag oder ein Aufkleber vorgesehen sein, der von dem mindestens einen Sensor ausgelesen werden kann, um den Werkzeugtyp zu erkennen. Die Markierung, der Tag oder der Aufkleber können im Sinne der Erfindung als Markierungsmittel bezeichnet werden. Der mindestens eine Sensor kann beispielsweise an einem Blattschutz der Werkzeugmaschine vorgesehen sein. Die Werkzeugmaschine kann einen Blattschutz aufweisen, der das Werkzeug der Werkzeugmaschine bei deren Betrieb zumindest teilweise umgibt und den Nutzer der Werkzeugmaschine vor Verletzungen oder dergleichen durch das Werkzeug oder durch herumfliegende Partikel, beispielsweise des zu bearbeitenden Untergrunds, schützt. Die Markierung, der Tag oder der Aufkleber können in räumlicher Nähe zum Umfang des bevorzugt kreisförmig ausgebildeten Werkzeugs angeordnet sein. Der Sensor kann so im Bereich des Blattschutzes oder am Blattschutz selbst angeordnet sein, dass die Markierungsmittel bei Betrieb der Werkzeugmaschine auf Höhe des Sensors vorbeilaufen, so dass die Markierungsmittel besonders einfach ausgelesen werden können.

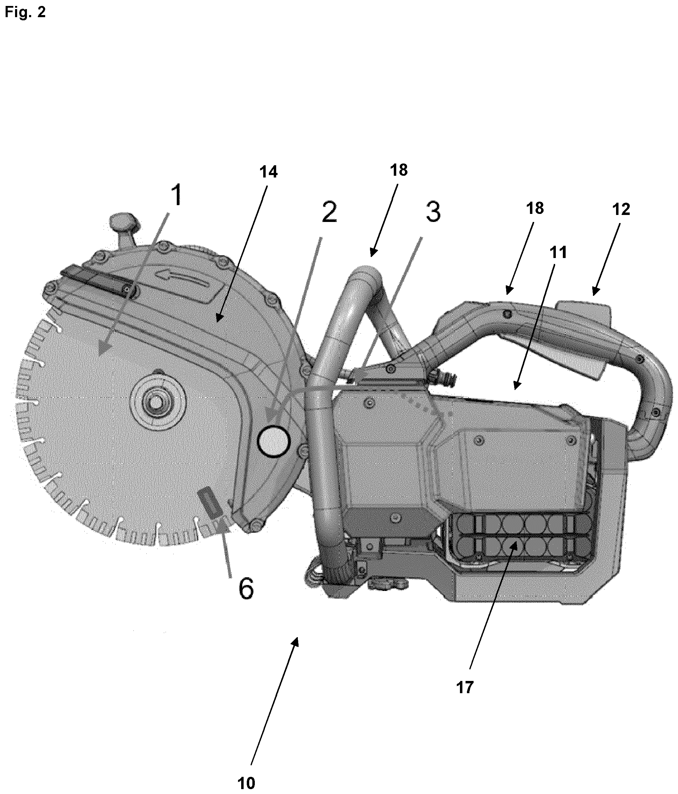

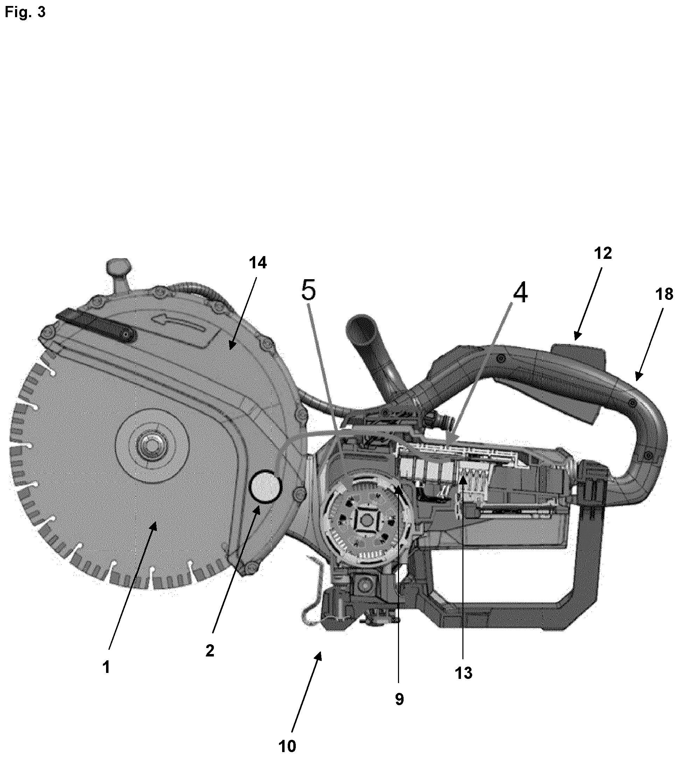

Der mindestens eine Sensor kann auch von einem Material-Sensor gebildet werden. Der Begriff «Material-Sensor» wird im Sinne der Erfindung als solcher Sensor verstanden, der in der Lage ist, das Material des Werkzeugs zu erkennen. Dabei kann es sich vorzugsweise um einen induktiv und/oder magnetoresistiv arbeitenden Sensor handeln. Bei Verwendung eines Material-Sensors kann der Werkzeugtyp mit Hilfe des Materials des Werkzeugs erkannt werden. Vorzugsweise kann der induktiv und/oder magnetoresistiv arbeitende Sensor ein Werkzeug des Werkzeugtyps A, das vorzugsweise Metall und/oder Stahl umfasst, oder ein Werkzeug des Werkzeugtyps B, das vorzugsweise Kunstharz umfasst, erkennen. Insbesondere wenn der mindestens eine Sensor als optischer Sensor oder als Material-Sensor ausgebildet ist, kann eine Anordnung des Sensors am Blattschutz der Werkzeugmaschine bevorzugt sein (siehe Figuren 2 und 3).

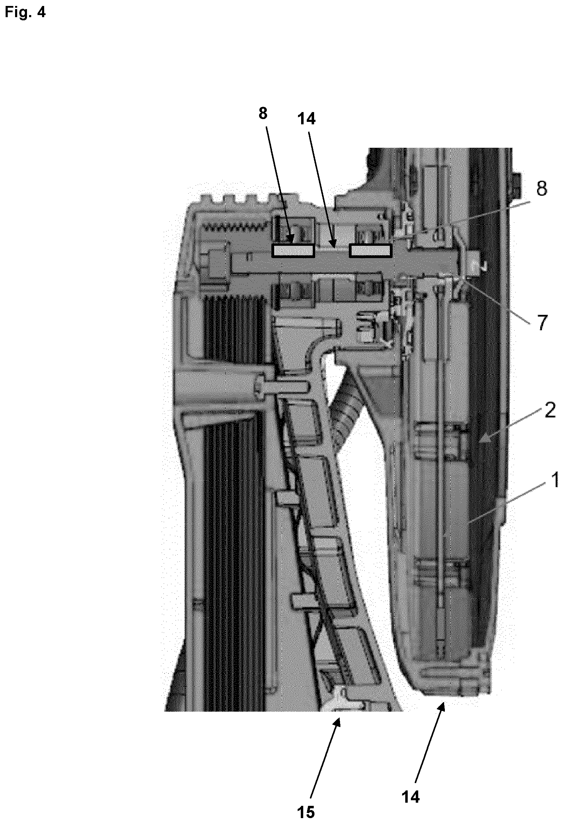

Der mindestens eine Sensor kann vorzugsweise auch als Gewichtssensor gebildet werden. Der Begriff «Gewichtssensor» wird im Sinne der Erfindung als solcher Sensor verstanden, der in der Lage ist, das Gewicht des Werkzeugs zu erkennen. Die so erhaltenen Gewichtsdaten des Werkzeugs können dann beispielsweise in der Steuereinrichtung der Werkzeugmaschine ausgewertet werden. Dabei kann eine informationstechnologische Verarbeitung der Sensordaten mit dem Ziel erfolgen, dass unterschiedliche Gewichte und/oder Massen des Werkzeugs unterschiedlichen Werkzeugtypen zugeordnet werden. Standard- oder Vergleichswerte für die Gewichte und/oder Massen des Werkzeugs können beispielsweise in der Werkzeugmaschine oder in ihrer Steuereinrichtung hinterlegt sein. Es ist im Sinne der Erfindung bevorzugt, dass die Werkzeugmaschine mit Hilfe des Gewichtssensors in der Lage ist, den Werkzeugtyp des an der Werkzeugmaschine verwendeten Werkzeugs anhand der Sensordaten zu erkennen. Bei dem Gewichtssensor kann es sich vorzugsweise um einen Piezosensor oder um ein Dehnungsmeßstreifen handeln. Das bedeutet im Sinne der Erfindung bevorzugt, dass der Gewichtssensor einen Piezosensor und/oder mindestens einen Dehnungsmeßstreifen umfassen kann. Der Gewichtssensor kann beispielsweise am Schneidarm der Werkzeugmaschine oder im Bereich einer Spindellagerung angeordnet sein. Wenn der Gewichtssensor einen Piezosensor oder ein Piezoelement umfasst, ist eine Anbringung des Gewichtssensors am Schneidarm besonders bevorzugt. Der Gewichtssensor kann dann das Gewicht am Schneidarm bzw. die Masse des Werkzeugs anhand der Kompression des Piezosensors bzw. des Piezoelements erkennen bzw. die mit dem Gewichtssensor ermittelten Daten können von der Steuereinrichtung so ausgewertet werden, dass der entsprechende Werkzeugtyp des verwendeten Werkzeugs erkannt wird. Wenn der Gewichtssensor als Dehnungsmeßstreifen ausgebildet ist oder einen solchen umfasst, ist eine Anbringung an der Lagerung für die Spindel der Werkzeugmaschine besonders bevorzugt sein (siehe Figur 4).

Es kann im Sinne der Erfindung auch bevorzugt sein, dass die Erkennung des Werkzeugtyps des Werkzeugs, das an der Werkzeugmaschine verwendet wird, ohne Verwendung eines Sensors erfolgt, sondern durch Auswertung einer beim An- oder Hochlaufen der Werkzeugmaschine benötigten Energiemenge. Diese Ausgestaltung der Erfindung wird bereits weiter oben im Detail beschrieben. Diese Ausgestaltung der Erfindung wird vorzugsweise als «sensorlose» Erkennung des Werkzeugtyps bezeichnet. Die Werkzeugmaschine, mit der eine «sensorlose» Erkennung des Werkzeugtyps durchgeführt werden kann, weist bevorzugt eine Steuereinrichtung auf, mit der Energiedaten beim An- oder Hochlaufen der Werkzeugmaschine ausgewertet werden können. Wenn sich die Energiewerte für die unterschiedlichen Werkzeugtypen stark unterscheiden, beispielsweise um einen Faktor von ca. 2, können die unterschiedlichen Energiemengen von der Steuereinrichtung den unterschiedlichen Werkzeugtypen zugeordnet und das aktuell verwendete Werkzeug bzw. sein Werkzeugtyp auf diese Weise bestimmt werden. Die Energiedaten können beispielsweise auch Strom- und/oder Spannungsdaten, sowie andere elektrische Meßwerte oder Daten umfassen. Die Energiedaten ermöglichen es vorzugsweise, eine beim Beschleunigen des Werkzeugs benötigte Energiemenge zu ermitteln. Die Erfinder haben erkannt, dass die zum Beschleunigen des Werkzeugs benötigte Energiemenge für unterschiedliche Werkzeugtypen charakteristisch sein und daher vorteilhafterweise zur Zuordnung einer Werkzeugtyps verwendet werden kann. Im Kontext der «sensorlosen» Erkennung des Werkzeugtyps ist es bevorzugt, dass beim Anlaufen der Werkzeugmaschine eine Energiemenge ermittelt wird, die für eine Drehbewegung des Werkzeugs erforderlich ist, wobei die ermittelte Energiemenge mit hinterlegten Werten für die Energiemenge verglichen wird. Es ist im Sinne der Erfindung bevorzugt, dass bei der «sensorlosen» Erkennung des Werkzeugtyps die Energiemenge für eine festgelegte Zeitspanne Δt ermittelt wird und mit hinterlegten Werten für die Energiemenge verglichen wird.

Es ist im Sinne der Erfindung bevorzugt, dass der Werkzeugtyp A mit einer ersten Energiemenge assoziiert wird und wobei der Werkzeugtyp B mit einer zweiten Energiemenge assoziiert wird, wobei die erste Energiemenge mit einem ersten Massebereich Δm1 des Werkzeugs korrespondiert und wobei die zweite Energiemenge mit einem zweiten Massebereich Δm2 des Werkzeugs der Werkzeugmaschine korrespondiert. Es ist darüber hinaus bevorzugt, dass der erste Massebereich Δm1 eine erste mittlere Masse m1 umfasst und der der zweite Massebereich Δm2 eine zweite mittlere Masse m2 umfasst, wobei die zweite mittlere Masse m2 kleiner ist als die erste mittlere Masse m1: m2 < m1.

Es ist im Sinne der Erfindung bevorzugt, dass die Energiemenge zum Anlaufen der Werkzeugmaschine bzw. zur Beschleunigung ihres Werkzeugs für eine festgelegte Zeitspanne Δt ermittelt wird. Es ist im Sinne der Erfindung bevorzugt, dass die Werkzeugmaschine eine Anlaufzeit Δt1 benötigt, um anzulaufen. Mit dem Begriff "Anlaufen" wird im Sinne der Erfindung die Zeitspanne Δt1 bezeichnet, die benötigt wird, um das Werkzeug der Werkzeugmaschine aus dem Stillstand (Geschwindigkeit v = 0 m/s) auf eine Maximaldrehzahl bzw. Maximalgeschwindigkeit zu beschleunigen, wobei die Maximaldrehzahl des Werkzeugs vorzugsweise im Bereich der zweiten mittleren Drehzahl n2 liegt. Vorzugsweise wird die Zeit t, bei der die Maximaldrehzahl bzw. Maximalgeschwindigkeit des Werkzeugs der Werkzeugmaschine erreicht wird, als Zeit t1 bezeichnet. Es ist im Sinne der Erfindung bevorzugt, dass die Anlaufzeit(spanne) Δt1 der Werkzeugmaschine in einem Bereich von 1 bis 8 Sekunden (s) liegt, bevorzugt in einem Bereich von 2 bis 5 s. Die zweite mittleren Drehzahl n2 kann im Sinne der Erfindung bevorzugt auch als "Peak-Wert" der Drehzahl des Werkzeugs der Werkzeugmaschine bezeichnet werden.

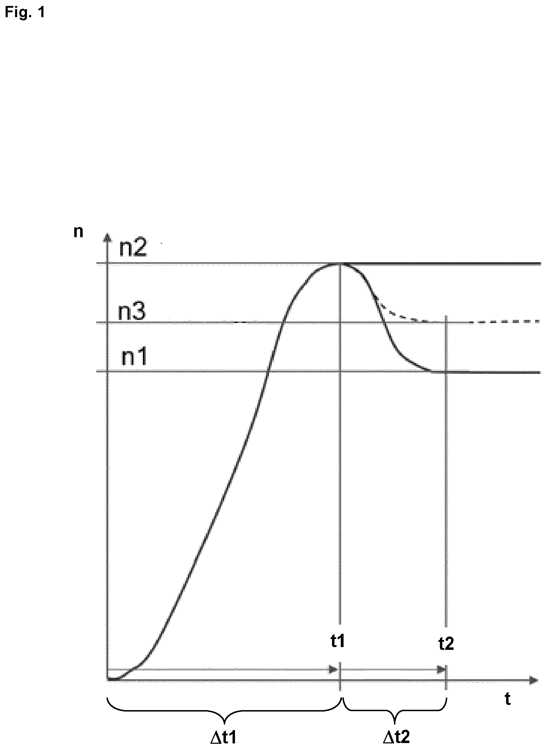

Der Verlauf der Drehzahl n in Abhängigkeit von der Zeit t kann in einem Drehzahl-Zeit-Diagramm aufgetragen werden (vgl. Figur 1). Dabei ist die Drehzahl n auf der y-Achse des Diagramms aufgetragen, während die Zeit t auf der x-Achse des Diagramms aufgetragen wird. Die Anlaufzeit Δt1 erstreckt sich vorzugsweise zwischen der y-Achse (x = t = 0 s) und dem x- oder Zeitwert t1, der vorzugsweise mit der Maximaldrehzahl bzw. Maximalgeschwindigkeit n2 zusammenfallen kann. Eine ähnliche Auftragung mit ähnlichem Verlauf könnte auch für die Umfangsgeschwindigkeit v in Abhängigkeit von der Zeit t erstellt werden.

An die Anlaufzeit Δt1, die vorzugsweise eine Zeitspanne darstellt, kann sich die Einstell- oder Anpassungszeit Δt2 anschließen, die vorzugsweise der Zeitspanne zwischen den Zeiten t1 und t2 entspricht. Die Zeit t2 entspricht im Wesentlichen der Zeit t, bei der die Drehzahl des Werkzeugs der Werkzeugmaschine einen im Wesentlichen konstanten Verlauf annimmt, wobei dieser konstante Verlauf der Drehzahl des Werkzeugs im Wesentlichen bei einer der Drehzahlen n1, n2 oder n3 stattfinden kann. Mögliche Verläufe der Drehzahl des Werkzeugs der Werkzeugmaschine in Abhängigkeit von dem erkannten Werkzeugtyp sind beispielhaft in Figur 1 abgebildet.

In einem zweiten Aspekt betrifft die Erfindung eine Werkzeugmaschine zur Durchführung des vorgeschlagenen Verfahrens. Die für das Betriebsverfahren eingeführten Begriffe, Definitionen und technischen Vorteile gelten vorzugsweise für die Werkzeugmaschine analog. Es ist im Sinne der Erfindung bevorzugt, dass die Werkzeugmaschine zur Erkennung des Werkzeugtyps des Werkzeugs, das an der Werkzeugmaschine verwendet wird, mindestens einen Sensor aufweist, wobei der mindestens eine Sensor zur Erkennung des Werkzeugtyps des Werkzeugs, das an der Werkzeugmaschine verwendet wird, ausgewählt ist aus einer Gruppe umfassend optischer Sensor, Material-Sensor und/oder Gewichtssensor. Vorzugsweise kann die Werkzeugmaschine eine Steuervorrichtung zur sensorlosen Erkennung des Werkzeugtyps des Werkzeugs, das an der Werkzeugmaschine verwendet wird, umfassen. Die Werkzeugmaschine kann darüber hinaus eine Anzeigevorrichtung zur Anzeige des erkannten Werkzeugtyps, zur Anzeige des eingestellten optimalen Drehzahlbereichs, zur Anzeige des eingestellten optimalen Bereichs für eine Umfangsgeschwindigkeit, zur Anzeige der mittleren Drehzahl des eingestellten optimalen Drehzahlbereichs und/oder zur Anzeige der mittleren Umfangsgeschwindigkeit des eingestellten optimalen Bereichs für die Umfangsgeschwindigkeit umfassen.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Darstellung einer beispielhaften Auftragung der Drehzahl n gegen die Zeit t
- Fig. 2: Seitenansicht einer bevorzugten Ausgestaltung einer als Trennschleifer ausgebildeten Werkzeugmaschine, mit beispielhafter Anbringung des mindestens einen Sensors und der Markierungsmittel
- Fig. 3: Seitenansicht einer bevorzugten Ausgestaltung einer als Trennschleifer ausgebildeten Werkzeugmaschine, mit beispielhafter Anbringung des mindestens einen Sensors am Blattschutz der Werkzeugmaschine
- Fig. 4: Detailansicht einer Spindellagerung einer bevorzugten Ausgestaltung der Werkzeugmaschine, mit beispielhafter Anbringung des mindestens einen Sensors im Bereich der Spindellagerung

### Ausführungsbeispiele und Figurenbeschreibung:

Figur 1 zeigt eine Darstellung einer beispielhaften Auftragung der Drehzahl n des Werkzeugs 1 der Werkzeugmaschine 10 gegen die Zeit t. Die Komponenten 1 bis 18 der Werkzeugmaschine 10 werden in den Figuren 2 bis 4 dargestellt. Dabei zeigen die Figuren 2 und 3 eine Seitenansicht einer bevorzugten Ausgestaltung einer Werkzeugmaschine 10. Figur 4 zeigt eine Detailansicht einer Spindellagerung 16 einer bevorzugten Ausgestaltung der Werkzeugmaschine 10 mit beispielhafter Anbringung des mindestens einen Sensors 8 im Bereich der Spindellagerung 16. Bei der in Figur 1 dargestellten Auftragung der Drehzahl n des Werkzeugs 1 der Werkzeugmaschine 10 gegen die Zeit t ist auf der y-Achse ist die Drehzahl n aufgetragen, mit der sich das Werkzeug 1 dreht, während auf der x-Achse die Zeit t aufgetragen ist. Die Drehzahl wird in der Einheit «Umdrehungen pro Minute» (rounds per minute, rpm) angegeben, während die Zeit vorzugsweise in der Einheit Sekunden (s) angeben werden kann.

In einem ersten Abschnitt der Auftragung der Drehzahl gegen die Zeit nimmt die Drehzahl rasch zu. Dieser erste Abschnitt erstreckt sich vorzugsweise zwischen der y-Achse und einer dazu parallel verlaufenden Gerade, die die x- oder Zeit-Achse bei t = t1 schneidet. In diesem ersten Abschnitt wird die die Werkzeugmaschine 10 eingeschaltet und das Werkzeug 1 wird beschleunigt. Dieser Vorgang wird als An- oder Hochlaufen des Werkzeugs 1 bzw. der Werkzeugmaschine 10 bezeichnet. Bei der Zeit t = t1 liegt vorzugsweise ein lokales Maximum oder ein sog. Peak der Drehzahl n vor. Dieser Peak markiert das Ende der An- oder Hochlaufphase der Werkzeugmaschine 10. Der y-Wert des Peaks entspricht vorzugsweise einem Drehzahlwert n2, der dem mittleren Wert des zweiten optimale Drehzahlbereichs entspricht, in dem die Werkzeugmaschine 10 vorzugsweise dann betrieben wird, wenn an der Werkzeugmaschine 10 ein Werkzeug des Werkzeugtyps B angeordnet vorliegt. Die Drehzahl n kann nach dem Peak bzw. nach der Zeit t1 auch abfallen, beispielsweise auf eine erste mittlere Drehzahl n1 oder eine dritte mittlere Drehzahl n3, wobei n1 und n3 vorzugsweise kleiner sind als n2. Die zweite mittlere Drehzahl n2 ist mit dem zweiten optimalen Drehzahlbereich assoziiert, der dann zum Einsatz kommt, wenn an der Werkzeugmaschine 10 ein Werkzeug 1 des Werkzeugtyps B angeordnet vorliegt bzw. ein solches Werkzeug 1 des Werkzeugtyps B während des Hochlaufens der Werkzeugmaschine 10 erkannt wurde. In diesem Fall kann es sich bei dem Werkzeug 1 vorzugsweise um eine abrasive Trennscheibe mit Schleifkörpern und Kunstharz handeln.

Die Hochlaufzeit(spanne) wird mit der Buchstabenkombination «Δt1» bezeichnet. Sie kann beispielsweise zwischen 2 und 5 Sekunden dauern. Während der Hochlaufzeit erkennt die Werkzeugmaschine 10 den Werkzeugtyp des Werkzeugs 1 der Werkzeugmaschine 10. Zur Erkennung des Werkzeugtyps des Werkzeugs 1 kann die Werkzeugmaschine 10 beispielsweise optische Sensoren 2, Material-Sensoren 2 oder Gewichtssensoren 8 umfassen. Die Werkzeugmaschine 10 kann auch ohne Sensoren 2, 8 auskommen und zur Erkennung des Werkzeugtyps des Werkzeugs 1 der Werkzeugmaschine 10 eine Steuereinrichtung 13 aufweisen. Die optischen und Material-Sensoren 2 können beispielsweise an einem Blattschutz 14 der Werkzeugmaschine 10 angeordnet vorliegen. Das Werkzeug 1 der Werkzeugmaschine 10 kann Markierungsmittel 6 aufweisen, die beispielsweise von einer Markierung, einem Tag oder einem Aufkleber gebildet werden können. In den Markierungsmitteln 6 kann eine für den Werkzeugtyp des Werkzeugs 1 der Werkzeugmaschine 10 spezifische Information codiert sein, wobei beispielsweise eine mechanische, elektromagnetische, induktive oder sonstige Codierung in Frage kommt. Der Inhalt der in den Markierungsmitteln 6 gespeicherten Information kann von den Sensoren 2 ausgelesen werden. Vorzugsweise kann die in den Markierungsmitteln 6 enthaltene Information insbesondere von den optischen Sensoren 2 ausgelesen werden. Die so erhaltenen Daten können beispielsweise in der Steuereinrichtung 13 der Werkzeugmaschine 10 informationstechnologisch verarbeitet bzw. ausgewertet werden, insbesondere mit dem Ziel, den Werkzeugtyp des Werkzeugs 1 der Werkzeugmaschine 10 zu ermitteln. Die Steuervorrichtung 13 der Werkzeugmaschine 10 kann eine Elektronik 4 umfassen, die über Zuleitungen 3 bzw. elektrisch leitfähige Verbindungen 3 bzw. Verbindungsmitteln 3 mit den Sensoren 2, 8 verbunden vorliegen kann.

Es ist im Sinne der Erfindung bevorzugt, dass ein Abstand der Markierungsmittel 6 zu einem Mittel- oder Aufhängepunkt des Werkzeugs 1 der Werkzeugmaschine 10 mit der Position des mindestens einen Sensors 2 am Blattschutz 14 der Werkzeugmaschine 10 korrespondiert. Das bedeutet im Sinne der Erfindung bevorzugt, dass sich die Markierungsmittel 6 bei Rotation des Werkzeugs 1 der Werkzeugmaschine 10 in räumlicher Nähe des mindestens einen Sensors 2 vorbeidrehen, so dass die Markierungsmittel 6 besonders einfach und unkompliziert ausgelesen werden können.

Alternativ oder ergänzend zu den Sensoren 2 kann die Werkzeugmaschine 10 Gewichtssensoren 8 aufweisen, die beispielsweise im Bereich einer Spindel 7 der Werkzeugmaschine 10 vorgesehen sein können. Die Spindel 7 wird von einem Motor 5 der Werkzeugmaschine 10 zu einer Drehbewegung angetrieben, wobei die Drehbewegung mit Hilfe der Spindel 7 auf das Werkzeug 1 der Werkzeugmaschine übertragen werden kann. Die Spindel 7 wird vorzugsweise im Bereich des vorderen Endes des Schneidarms 15 der Werkzeugmaschine 10 gelagert, wobei im Bereich dieser Spindellagerung 16 die Gewichtssensoren 8 angeordnet vorliegen können. Die Gewichtssensoren 8 sind insbesondere dann im Bereich der Spindellagerung 16 angeordnet, wenn die Gewichtssensoren 8 Dehnungsmeßstreifen umfassen. Wenn die Gewichtsensoren 8 Piezoelemente oder Piezosensoren umfassen, ist eine Anbringung am Schneidarm 15 der Werkzeugmaschine 10 bevorzugt.

Die Erkennung des Werkzeugtyps des Werkzeugs 1 der Werkzeugmaschine 10 kann vorzugsweise mit Hilfe der Sensoren 2, 8 oder unter Verwendung der Steuervorrichtung 13 der Werkzeugmaschine 10 erfolgen. Die Erkennung des Werkzeugtyps erfolgt erfindungsgemäß während des Hoch- oder Anlaufens der Werkzeugmaschine 10 oder ihres Werkzeugs 1. Die Werkzeugmaschine 10 kann, wie in den Figuren 2 bis 4 dargestellt, beispielsweise als Trennschleifer ausgebildet sein, wobei das Werkzeug 1 des Trennschleifers 10 von einer Trennscheibe 1 gebildet werden kann. Die Werkzeugmaschine 10 kann über eine Energieversorgungsvorrichtung 17 mit elektrischer Energie versorgt werden. Die Werkzeugmaschine 10 kann darüber hinaus Griffe 18 zum besseren Transport und zum Halten der Werkzeugmaschine 10 während der Arbeit aufweisen. Darüber hinaus kann die Werkzeugmaschine 10 Bedienelemente 12 zur Eingabe von Befehlen oder dergleichen umfassen, sowie eine Anzeigevorrichtung 11, mit der der ermittelte Werkzeugtyp, die aktuelle oder optimale Drehzahl und/oder ein Drehzahlbereich angezeigt werden können. Der Motor 5 der Werkzeugmaschine 10 kann über Zuleitungen 9 mit elektrischer Energie versorgt werden. Alternativ können die Zuleitungen 9 des Motors 5 dazu verwendet werden, Steuerbefehle, beispielsweise von der Elektronik 4 der Werkzeugmaschine 10, an den Motor 5 zu übermitteln.

An die Hochlaufzeit kann sich eine Anpassungszeit «Δt2» anschließen, in der sich die zu dem erkannten Werkzeugtyp «passende» Drehzahl des Werkzeugs 1 der Werkzeugmaschine 10 einstellt. Diese Einstellung der «passenden» Drehzahl des Werkzeugs 1 der Werkzeugmaschine 10 kann vorzugsweise automatisch erfolgen. Es kann im Sinne der Erfindung aber auch bevorzugt sein, dass die Nutzer lediglich Informationen und Hilfestellungen auf einer Anzeigevorrichtung 11 angezeigt werden, mit deren Hilfe der Nutzer dann in die Lage versetzt wird, die «passende» Drehzahl des Werkzeugs 1 der Werkzeugmaschine 10 selbst einzustellen. Dies wird im Sinne der Erfindung bevorzugt als «manuelle Einstellung der Drehzahl des Werkzeugs 1 der Werkzeugmaschine 10» bezeichnet. Als «Anpassungszeit Δt2» wird im Kontext der vorliegenden Erfindung vorzugsweise diejenige Zeitspanne bezeichnet, die zwischen den Zeiten t1 und t2 liegt bzw. von diesen begrenzt wird. Die in der Auftragung dargestellte Drehzahl n kann in dieser Anpassungsphase «Δt2» entweder auf dem hohen Niveau der zweiten mittleren Drehzahl n2 verbleiben. Dies passiert insbesondere dann, wenn die Werkzeugmaschine 10 während des Hochlaufens erkennt, dass ein Werkzeug 1 des Werkzeugtyps B, das insbesondere zur Bearbeitung von Metall oder Stahl verwendet wird, an der Werkzeugmaschine 10 angeordnet ist. Wenn die Werkzeugmaschine 10 während des Hochlaufens erkennt, dass ein Werkzeug 1 des Werkzeugtyps A, das insbesondere zur Bearbeitung von Mauerwerk, Beton oder Stein verwendet wird, an der Werkzeugmaschine 10 angeordnet ist, kann die Drehzahl n auf einen niedrigeren ersten mittleren Drehzahlwert n1 abfallen, der mit ersten optimalen Drehzahlbereich assoziiert ist. Die Werkzeugmaschine 10 wird immer dann in dem ersten optimalen Drehzahlbereich betrieben, wenn an der Werkzeugmaschine 10 ein Werkzeug 1 des Werkzeugtyps A angeordnet vorliegt bzw. ein solches Werkzeug 1 des Werkzeugtyps A während des Hochlaufens der Werkzeugmaschine 10 erkannt wurde. In diesem Fall kann es sich bei dem Werkzeug 1 vorzugsweise um eine Diamant-Trennscheibe handeln.

Wenn die Werkzeugmaschine 10 nicht in der Lage war, während des Hochlaufens einen Werkzeugtyp zu ermitteln oder wenn die Erkennung des Werkzeugtyps fehlschlug, wird in der Anpassungsphase «Δt2» vorzugsweise eine dritte mittlere Drehzahl n3 eingestellt, die bevorzugt zwischen der ersten mittleren Drehzahl n1 und der zweiten mittleren Drehzahl n2 liegt. Die dritte mittlere Drehzahl n3 kann beispielsweise auch dann eingestellt werden, wenn die Erkennung des Werkzeugtyps des Werkzeugs 1 der Werkzeugmaschine 10 ausgeschaltet ist. Die dritte mittlere Drehzahl n3 liegt vorzugsweise zwischen der ersten mittleren Drehzahl n1 und der zweiten mittleren Drehzahl n2. Die Anpassungsphase «Δt2» entspricht vorzugsweise der Zeitspanne, die die Werkzeugmaschine 10 zur Einstellung der Drehzahl n benötigt, die zum ermittelten Werkzeugtyp passt.

### Bezugszeichenliste

- 1: Werkzeug
- 2: optischer Sensor oder Material-Sensor
- 3: elektrisch leitfähige Verbindung zwischen Elektronik und Sensor 2
- 4: Elektronik
- 5: Motor
- 6: Markierungsmittel
- 7: Spindel für das Werkzeug
- 8: Gewichtssensor
- 9: Zuleitung für den Motor
- 10: Werkzeugmaschine
- 11: Anzeigevorrichtung
- 12: Bedienelement
- 13: Steuervorrichtung
- 14: Blattschutz
- 15: Schneidarms
- 16: Spindellagerung
- 17: Energieversorgungsvorrichtung
- 18: Griffe

## Patentansprüche

1. Verfahren zum Betrieb einer Werkzeugmaschine (10) mit einem insbesondere rotierenden Werkzeug (1), wobei die Werkzeugmaschine (10) zumindest mit Werkzeugen (1) des Werkzeugtyps A und des Werkzeugtyps B betrieben werden kann, wobei der Werkzeugtyp A mit einem ersten optimalen Drehzahlbereich assoziiert ist und wobei der Werkzeugtyp B mit einem zweiten optimalen Drehzahlbereich assoziiert ist, wobei das Verfahren **durch die folgenden Verfahrensschritte gekennzeichnet** ist:
a) beim Anlaufen der Werkzeugmaschine (10): Erkennung des Werkzeugtyps des Werkzeugs (1), das an der Werkzeugmaschine (10) verwendet wird,
b) Einstellung des optimalen Drehzahlbereichs in Abhängigkeit von dem ermittelten Werkzeugtyp des Werkzeugs (1), das an der Werkzeugmaschine (10) verwendet wird,
c) Betrieb der Werkzeugmaschine (10) in einem ersten optimalen Drehzahlbereich, wenn ein Werkzeug (1) des Werkzeugtyps A erkennt wird oder
d) Betrieb der Werkzeugmaschine (10) in einem zweiten optimalen Drehzahlbereich, wenn ein Werkzeug (1) des Werkzeugtyps b erkennt wird,
wobei der erste optimale Drehzahlbereich eine erste mittlere Drehzahl n1 umfasst und der der zweite optimale Drehzahlbereich eine zweite mittlere Drehzahl n2 umfasst und die zweite mittlere Drehzahl n2 größer ist als die erste mittlere Drehzahl n1: n2 > n1.

2. Verfahren nach Anspruch 1
**dadurch gekennzeichnet, dass**
die Einstellung des optimalen Drehzahlbereichs automatisch erfolgt.

3. Verfahren nach Anspruch 1 oder 2
**dadurch gekennzeichnet, dass**
der erkannte Werkzeugtyps, der eingestellte optimale Drehzahlbereich, die mittlere Drehzahl des eingestellten optimalen Drehzahlbereichs, der eingestellte optimale Bereich für eine Umfangsgeschwindigkeit und/oder die mittlere Umfangsgeschwindigkeit des eingestellten optimalen Bereichs für eine Umfangsgeschwindigkeit auf einer Anzeigevorrichtung (11) der Werkzeugmaschine (10) angezeigt wird.

4. Verfahren nach Anspruch 1
**dadurch gekennzeichnet, dass**
die Einstellung des optimalen Drehzahlbereichs manuell erfolgt.

5. Verfahren nach Anspruch 1 oder 4
**dadurch gekennzeichnet, dass**
die Werkzeugmaschine (10) ein Bedienelement (12) für die manuelle Einstellung des optimalen Drehzahlbereichs aufweist.

6. Verfahren nach einem der vorhergehenden Ansprüche
**dadurch gekennzeichnet, dass**
die Werkzeugmaschine (10) in einem dritten optimalen Drehzahlbereich betrieben wird, wenn keine Erkennung des Werkzeugtyps des Werkzeugs (1), das an der Werkzeugmaschine (10) verwendet wird, möglich ist.

7. Verfahren nach Anspruch 6
**dadurch gekennzeichnet, dass**
der dritte optimale Drehzahlbereich eine dritte mittlere Drehzahl n3 umfasst und wobei die dritte mittlere Drehzahl n3 zwischen der ersten mittleren Drehzahl n1 und der zweiten mittleren Drehzahl n2 liegt.

8. Verfahren nach einem der vorhergehenden Ansprüche
**dadurch gekennzeichnet, dass**
die Werkzeugmaschine (10) mindestens einen Sensor (2, 8) zu Erkennung eines Werkzeugtyps des Werkzeugs (1), das an der Werkzeugmaschine (10) verwendet wird, umfasst.

9. Verfahren nach Anspruch 8
**dadurch gekennzeichnet, dass**
der mindestens eine Sensor (2, 8) zur Erkennung des Werkzeugtyps des Werkzeugs (1), das an der Werkzeugmaschine (10) verwendet wird, ausgewählt ist aus einer Gruppe umfassend optischer Sensor (2), Material-Sensor (2) und/oder Gewichtssensor (8).

10. Verfahren nach einem der Ansprüche 1 bis 7
**dadurch gekennzeichnet, dass**
die Erkennung des Werkzeugtyps des Werkzeugs (1), das an der Werkzeugmaschine (10) verwendet wird, ohne Verwendung eines Sensors (2, 8) erfolgt, sondern durch Auswertung einer beim Anlaufen der Werkzeugmaschine (10) benötigten Energiemenge.

11. Verfahren nach Anspruch 10
**dadurch gekennzeichnet, dass**
beim Anlaufen der Werkzeugmaschine (10) eine Energiemenge ermittelt wird, die für eine Drehbewegung des Werkzeugs (1) erforderlich ist.

12. Werkzeugmaschine (10) zur Durchführung des Verfahrens nach einem der Ansprüche 1 bis 11.

13. Werkzeugmaschine (10) nach Anspruch 12,
**dadurch gekennzeichnet, dass**
die Werkzeugmaschine (10) zur Erkennung des Werkzeugtyps des Werkzeugs (1), das an der Werkzeugmaschine (10) verwendet wird, mindestens einen Sensor (2, 8) aufweist, wobei der mindestens eine Sensor (2, 8) zur Erkennung des Werkzeugtyps des Werkzeugs (1), das an der Werkzeugmaschine (10) verwendet wird, ausgewählt ist aus einer Gruppe umfassend optischer Sensor (2), Material-Sensor (2) und/oder Gewichtssensor (8).

14. Werkzeugmaschine (10) nach Anspruch 12 oder 13
**dadurch gekennzeichnet, dass**
die Werkzeugmaschine (10) eine Steuervorrichtung (13) zur sensorlosen Erkennung des Werkzeugtyps des Werkzeugs (1), das an der Werkzeugmaschine (10) verwendet wird, umfasst.

15. Werkzeugmaschine (10) nach einem der Ansprüche 12 bis 14
**dadurch gekennzeichnet, dass**
die Werkzeugmaschine (10) eine Anzeigevorrichtung (11) zur Anzeige des erkannten Werkzeugtyps, zur Anzeige des eingestellten optimalen Drehzahlbereichs, zur Anzeige der mittleren Drehzahl des eingestellten optimalen Drehzahlbereichs, zur Anzeige des eingestellten optimalen Bereichs für eine Umfangsgeschwindigkeit und/oder zur Anzeige der mittleren Umfangsgeschwindigkeit des eingestellten optimalen Bereichs für eine Umfangsgeschwindigkeit umfasst.
